# EUROPEAN PATENT APPLICATION

(11) **EP 2 778 322 A1**
(43) Date of publication of application: **17.09.2014**
(21) Application number: 12837662.1
(22) Date of filing: 12.10.2012
(51) Int. Cl.: E05B 45/00

(54) **DOOR LOCK DEVICE**

(30) Priority: 10.11.2011 KR 20110117222
(71) Applicant: Cho, Hee Moon, Seoul 135-960 (KR)
(72) Inventor: Cho, Hee Moon, Seoul 135-960 (KR)
(74) Representative: Viering, Jentschura & Partner Patent- und Rechtsanwälte
(86) International application number: PCT/KR2012/008288
(87) International publication number: WO 2013/069896

(57) **Abstract**

A door lock apparatus operated so as to ring and be heard only indoors, without ringing and being heard outdoors when movements outside a door are detected, thereby improving the function of keeping watch indoors over the outdoor movements. The door lock apparatus includes a door lock provided both with a chime bell and with a camera, the door lock being installed outdoors; and a monitoring unit displaying operations of the chime bell and of the camera thereon and selectively opening or closing a door, the monitoring unit being installed indoors, wherein the door lock is further provided with a motion sensor, and the monitoring unit is configured such that, when movements outside the door are detected by the motion sensor, the monitoring unit receives a captured image and simultaneously operates the chime bell so as to ring and be heard only indoors, without ringing and being heard outdoors.

## Description

### [Technical Field]

The present invention relates, in general, to door lock apparatuses and, more particularly, to a door lock apparatus which is configured to operate a chime bell so as to ring and be heard only indoors when movements outside a door are detected, thereby improving the function of monitoring the outdoor movements from indoors.

### [Background Art]

Generally, a door lock has a chime bell function of alerting a host that a visitor has arrived in addition to a door locking function. Especially, to realize the chime bell function of a door lock, both a chime bell and a camera are installed in the door lock, and a monitoring unit is installed indoors, so that when a visitor presses a call button of the chime bell, an indoor bell rings indoors and the monitoring unit displays a captured image of the visitor thereon. In recent years, door locks have been actively studied to improve the security functions thereof, for example, a function of checking the identity of a visitor when a host is not at home or a function of detecting a breakage of the door lock and of informing the host of the breakage.

Patent document (Korean Patent Laid-open Publication No. 10-2004-0096466 (November 16, 2004) discloses a technique of controlling a door lock, in which, when a person calls at a host's house while the host is not at home, the visitor can call the host using, for example, a telephone, and so the host can directly check the identity of the visitor. The technique of controlling the door lock is used with a MOBELL system which is configured such that, when a visitor presses a call button when a host is absent, the MOBELL system automatically calls the absent host on a phone (mobile phone or wire telephone) that was previously registered, thereby allowing the host to talk over the phone with the visitor by voice call and/or video call and allowing the host to directly check the identity of the visitor prior to inputting a DTMF signal into a channel so as to control the door lock, wherein the system includes a MOBELL system which is configured such that when a visitor presses the call button when a host is absent, the MOBELL system can cooperate with an outdoor network and can connect the visitor to the absent host by telephone; a home server for storing both a call history and a captured image of the visitor in cooperation with the MOBELL system, and for storing a visit purpose of the visitor when the MOBELL system fails to connect the visitor to the host; a door lock for controlling a door; an outdoor communication network (mobile communication network or public telephone network) for connecting the MOBELL system to a mobile phone or to a wire telephone so as to realize voice call and video call; and a user phone (mobile phone or wire telephone) for allowing the host to talk over the phone with the visitor by voice call or video call after the host checks the visitor's identity.

However, the conventional door lock is problematic when checking the identities of visitors or when performing security functions, for the following reasons.
1. Even when a potential intruder checks whether the user's house shows signs of life or not while passing by the door for the purpose of theft, a host inside the house cannot sense the suspicious behavior of the person.
2. Especially, when a person stands in front of the door and checks whether the host is at home or not while he or she disguises himself/herself as a visitor, a salesman or a catalog distributer, the host inside the house cannot sense the presence of the person in front of the door and there is no method of checking the presence of the potential criminal outside the door.

### [Disclosure]

### [Technical Problem]

Accordingly, the present invention has been made keeping in mind the above problems occurring in the related art, and is intended to provide a door lock apparatus, in which a motion sensor is provided in a door lock, and which is configured such that, when a visitor enters into a place with a predetermined limited distance from a door without pressing a call button of a chime bell, the apparatus captures an image of the visitor and shows the captured image of the visitor to the host inside the house and, at the same time, operates the chime bell so as to ring and be heard only indoors, without ringing and being heard outdoors when movements outside a door are detected, thereby informing the host of the presence of the visitor, and allowing the host to efficiently confront an intruder after the host distinguishes the intruder from a known or welcome visitor outside the door in advance.

Further, the present invention serves to provide a door lock apparatus which is configured such that the sound of the chime bell that informs the host of the presence of a known or welcome visitor is different from the sound of the chime bell which is generated when movements outside the door are detected, thereby allowing the host inside the house to easily and quickly distinguish an intruder from a known or welcome visitor by only the chime bell sound and to efficiently confront the intruder outside the door.

Further, the present invention serves to provide a door lock apparatus which can display indoors an image of a visitor captured by a camera on a screen, a TV monitor, a computer monitor or the like after detecting movements in front of a door, thereby allowing a host inside the house to easily check the identity of the visitor without moving to the entrance or to a place around the entrance.

### [Technical Solution]

In an aspect, the present invention provides a door lock apparatus, including: a door lock provided both with a chime bell and with a camera, the door lock being installed outdoors; and a monitoring unit displaying operations of the chime bell and of the camera thereon and selectively opening or closing a door, the monitoring unit being installed indoors, wherein the door lock is further provided with a motion sensor, and the monitoring unit is configured such that, when movements outside the door are detected by the motion sensor, the monitoring unit receives a captured image and simultaneously operates the chime bell so as to ring and be heard only indoors.

Further, the sound of the chime bell generated indoors may be different from the sound of the chime bell generated outdoors.

Further, the door lock apparatus may further include: an additional camera and an additional monitoring unit provided so as to capture an image of the movements outside the door and to output the captured image when the motion sensor detects the movements outside the door.

Further, the monitoring unit may be a screen, a computer monitor or a TV monitor.

### [Advantageous Effects]

As described above, the door lock apparatus of the present invention is advantageous as follows.
1. When there are preliminary movements of a suspected criminal in front of the door, such as when the suspected criminal checks whether the user's house shows signs of life or not by applying his or her ear to the door without pressing the call button of the chime bell, for the purpose of committing a theft, the door lock apparatus alerts the host inside the house to the suspicious behavior of the suspected criminal both by a bell sound and by a captured image, thereby allowing the user to efficiently deal with the presence of the suspected criminal in front of the door.
2. When a child presses or intends to press the call button of the chime bell for fun, the door lock apparatus can capture images of the child's movements using the camera and can store the captured images, thereby affording proof of the child's misbehavior.
3. The door lock apparatus can display the images captured by the camera on the monitoring unit, such as a screen, a TV monitor or the like, thereby allowing the host inside the door to efficiently confront an intruder while watching the situation outside the door.

### [Description of Drawings]

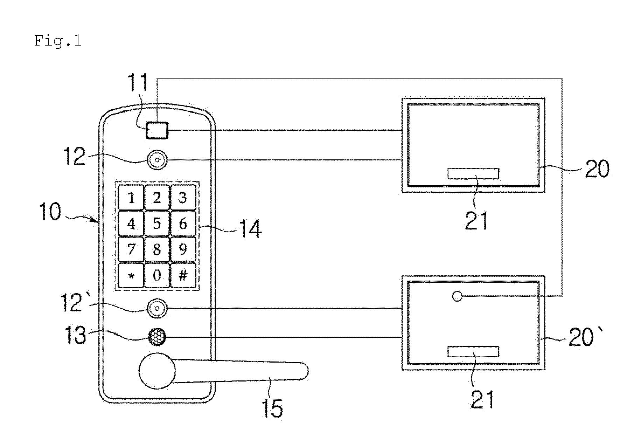

Fig. 1 is a view schematically illustrating the operation of a door lock according to the present invention.
10: door lock
11: chime bell
12: camera
13: motion sensor
14: keypad
15: door handle
20: monitoring unit

### [Best Mode]

Hereinafter, the preferred embodiment of the present invention will be described in detail with reference to the accompanying drawings. The terminologies or words used in the description and the claims of the present invention should not be interpreted as being limited merely to their common and dictionary meanings. On the contrary, they should be interpreted based on the meanings and concepts of the invention in keeping with the scope of the invention based on the principle that the inventor can appropriately define the terms in order to describe the invention in the best way.

Accordingly, it is to be understood that the embodiment described in the specification and the construction shown in the drawing is to be taken as a preferred embodiment of the present invention and that the spirit and scope of the present invention is not limited to the embodiment, and that various equivalents and modifications may be made in the invention at the time of filing the application without departing from the spirit and scope of the present invention.

### (Construction)

Fig. 1 is a view schematically illustrating the operation of a door lock according to the present invention.

The door lock apparatus according to the present invention includes: a door lock 10 that is installed in the outside of a door and performs both a door opening/closing function and a chime bell function; and a monitoring unit 20 that is installed indoors and displays a captured image in response to an operation of the door lock 10, and locks/unlocks the door.

Especially, the door lock apparatus of the present invention further includes a motion sensor 13 installed in the door lock 10 so that, when movements are detected by the motion sensor 13, the monitoring unit 20 can operate the chime bell so as to ring and be heard only indoors, without ringing and being heard outdoors when movements outside a door are detected, thereby efficiently informing a host inside the door of the movements even when a person moves in front of the door without pressing a call button of the chime bell.

Hereinbelow, the above-mentioned construction will be described in more detail.

The door lock 10 is installed in the outside of the door and is configured to open or close the door and to inform the host of a visitor when there is the visitor in front of the door.

The door lock 10 is provided with both a chime bell 11 and a camera 12 which allow a visitor to call the host. When the visitor presses the call button of the chime bell 11, the camera 12 captures an image of the visitor and outputs the captured image to the monitoring unit 20.

In a preferred embodiment of the present invention, the door lock 10 is further provided with a motion sensor 13. The motion sensor 13 is a kind of a motion detection sensor that is used to sense the movements or position of people or objects. The motion sensor 13 may be selected from a conventional sensor, such as a terrestrial magnetic sensor, an acceleration sensor and a composite chip type sensor produced by integrating a height indicator and a gyroscope, which are used in compasses, stepwatches, navigations or mobile phones. When the motion sensor 13 detects movements outside the door, the motion sensor 13 outputs a signal indicative of the movements to the monitoring unit 20.

Here, the reference numeral 14 denotes a keypad that is provided in the front surface of the door lock 10 and allows a user to input a cipher, and the numeral 15 denotes a door handle.

When there are movements outside the door, the motion sensor 13 of the door lock 10 having the above-mentioned construction detects the movements and outputs a detection signal to the monitoring unit 20. In the above state, the camera 12 is operated to capture an image of the movements at the same time and outputs a signal indicative of the captured image to the monitoring unit 20.

The monitoring unit 20 is a kind of display and is installed indoors, for example, in the inside of the door or on an interior wall, and processes the signals output from the chime bell 11 and from the camera 12. In other words, when a visitor presses the call button of the chime bell 11, the monitoring unit 20 operates the bell, thereby ringing the bell and alerting the host inside the door to the presence of the visitor. Here, the chime bell 11 is operated in such a way that both the host inside the door and the visitor outside the door can hear the bell sound. Further, when the call button of the chime bell 11 is pressed, the camera 12 captures an outdoor image and outputs a signal indicative of the captured image to the monitoring unit 20. Upon receiving the output signal of the camera 12, the monitoring unit 20 reproduces the captured image and allows the host inside the door to visually check the identity of the visitor.

Meanwhile, when the monitoring unit 20 receives an output signal from the motion sensor 13, which is a detection signal indicative of the occurrence of movements outside the door, the monitoring unit 20 operates the chime bell 11 so as to alert the host to the occurrence of movements outside the door and, at the same time, displays an image captured by the camera 12 thereon so as to allow the host to check the cause of the movements.

In the preferred embodiment of the present invention, the chime bell 11 and the camera 12 may use a chime bell and a camera which are installed in a conventional door lock apparatus or may use an additional chime bell 11 and an additional camera 12' in addition to the conventional chime bell and the conventional camera. However, in the present invention, to realize a simple construction of the door lock apparatus, it is preferred that the chime bell use a chime bell of a conventional door lock apparatus.

Further, in the present invention, it is preferred that, when the chime bell 11 is operated in response to a detection signal output from the motion sensor 13, the chime bell rings and is heard only indoors, without ringing and being heard outdoors, thereby concealing the state in which the host was already informed of the movements outside the door.

Further, in an embodiment of the present invention, it is preferred that the chime bell which is operated in response to a signal output from the motion sensor 13 be configured to generate a sound different from the sound of the chime bell 11 which is generated when a visitor presses the call button of the chime bell 11, thereby allowing the host to easily distinguish the two situations from each other by the difference in the sound.

The reference numeral "21" denotes an on/off switch that is provided in the monitoring unit 20 and is used to open or close the door. The on/off switch may be selected from among various touch panels.

Further, the monitoring unit 20 may be a display that is typically installed in the indoor area of the entrance. Further, a screen that is widely used with an audio system in recent years, a TV screen or a typical computer monitor may be used as the monitoring unit 20'. When the monitoring unit 20' is formed using one of the above-mentioned electronic devices, the present invention is advantageous in that, when movements outside the door are detected while the host uses the electronic device, the host can directly check the identity of the visitor using the monitoring unit 20' without moving to the entrance.

Further, the monitoring units 20 and 20' may be used together in conjunction with each other.

As described above, the door locking apparatus of the present invention is advantageous in that, when the motion sensor detects movements outside the door, the door lock apparatus can display a captured image of the movements on the monitoring unit and can alert a host inside the door to the movements using the chime bell, thereby realizing antitheft effects and allowing the host to efficiently prepare for a break-in situation in advance.

## Claims

1. A door lock apparatus, comprising:
a door lock (10) provided both with a chime bell (11) and with a camera (12), the door lock being installed outdoors; and
a monitoring unit (20) displaying operations of the chime bell (11) and of the camera (12) thereon and selectively opening or closing a door, the monitoring unit being installed indoors, wherein
the door lock (10) is further provided with a motion sensor (13), and
the monitoring unit (20) is configured such that, when movements outside the door are detected by the motion sensor (13), the monitoring unit receives a captured image and simultaneously operates the chime bell so as to ring and be heard only indoors.

2. The door lock apparatus according to claim 1, wherein a sound of the chime bell generated indoors is different from a sound of the chime bell (11) generated outdoors.

3. The door lock apparatus according to claim 1 or 2, further comprising:
an additional camera (12') and an additional monitoring unit (20') provided so as to capture an image of the movements outside the door and to output a captured image when the motion sensor detects the movements outside the door.

4. The door lock apparatus according to claim 3, wherein the monitoring unit (20') is a screen, a computer monitor or a TV monitor.
